(19) Europäisches Patentamt
European Patent Office
Office européen des brevets

(11) **EP 2 078 853 A1**

(12) **EUROPEAN PATENT APPLICATION**

(43) Date of publication:
**15.07.2009 Bulletin 2009/29**

(51) Int Cl.:
*F03D 5/04* (2006.01)　　　*F03D 7/00* (2006.01)
*F03D 11/00* (2006.01)

(21) Application number: **08425009.1**

(22) Date of filing: **09.01.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(71) Applicant: **Nevi, Ugo**
**00133 Rome (IT)**

(72) Inventor: **Nevi, Ugo**
**00133 Rome (IT)**

(74) Representative: **Conforti Cioncoloni, Marisa**
**c/o Studio Consulenza Brevetti**
**21, Viale Castrense**
**00182 Rome (IT)**

(54) **Machine transforming wind energy in electric energy**

(57)　　A machine (100) transforming wind energy in electric energy, characterized in that comprising:
- at least one trolley (101), free to run along a constrained path on a guiding system (104);
- at least one system of sails (102, 103), carried on said trolley (101), able to interact with wind currents and therefore to transform wind energy in kinetic energy of the same trolley (101);
- means for orientation and control of said system of sails (102, 103);
- at least one dynamo, comprising a train of gears activated by motion of said trolley (101), able to generate electric energy;
- means for transmission of electric energy towards one or more external users (load) or towards energy accumulation devices (battery),

so that said system of sails (102, 103) interacts with wind currents and leads the motion of said trolley (101) along said guiding system (104), and gears of said dynamo are simultaneously activated, generating in this way the electric energy that can be stored in said energy accumulation devices.

Fig. 1

**Description**

TECHNICAL FIELD

The present invention concerns a machine able to produce electric energy starting from kinetic energy of wind, or so-called wind energy.

The first machines of ancient times, able to use the wind energy, were the windmills. The first windmills were useful to move millstones in order to crush grain or to drain water after the construction of dams. They were composed of wooden frames where canvas elements were fixed so that they represented real sails put in rotation by wind power.

When steam machines and modern industrial plants started to be available, new technologies for energy production were established, and wind machines were used only as small simple devices or installed in small local farms.

As known, with the recent increase of global energy demand and the rise of prices, wind technologies are rediscovered and improved, and nowadays wind power is recognized as one of the most important and most promising renewable sources of energy.

BACKGROUND ART

Actually, wind turbines belong to two different classes: vertical axis turbines and horizontal axis turbines. The most common are the horizontal axis ones, because they allow to obtain the most powerful force caused by winds at higher distance from the ground level.

Among the well known technologies for energy production, surely that using wind as a resource is one of the best, because it does not create pollution or production waste, and because it uses something that is available everywhere and forever in the world: the wind.

The only drawback of wind plants is given by environmental impact from the visual point of view, in fact recent realizations consist of *off-shore* plants installed very far from land coasts.

DISCLOSURE OF INVENTION

The present invention proposes a new technology for transformation of wind energy in electric energy, that does not require installation of big plants that are visible from high distance, and therefore it has a significantly low environmental impact in respect of known technologies.

Furthermore, the modularity and scalability of these machines allow to customize applications according to different landscapes and different local demand of low cost energy.

Therefore, the main objective of the present invention is to provide a machine able to transform wind energy in electric energy, so that the same electric energy can be directly available to a final user or stored in proper energy accumulation devices.

Another objective of the present invention is to introduce a machine where said transformation of energy can happen in any environmental situation, providing orientation and calibration of parts according to different values of angle and intensity of winds.

A further objective is to have modular and scalable parts so that the machine can be used according to different topologies and different levels of complexity, going from the typical dimensions of scale models, to the dimensions of big power plants.

Another further objective is to propose a machine that can be realized on a large industrial scale, having standard and well available components, characterized in a sustainable production either from economical and from environmental point of view.

Therefore, it is specific subject of the present invention a machine transforming wind energy in electric energy, characterized in that comprising:

- at least one trolley, free to run along a constrained path on a guiding system;
- at least one system of sails, carried on said trolley, able to interact with wind currents and therefore to transform wind energy in kinetic energy of the same trolley;
- means for orientation and control of said system of sails;
- at least one dynamo, comprising a train of gears activated by motion of said trolley, able to generate electric energy;
- means for transmission of electric energy towards one or more external users (load) or towards energy accumulation devices (battery),
  so that said system of sails interacts with wind currents and leads the motion of said trolley along said guiding system, and gears of said dynamo are simultaneously activated, generating in this way the electric energy that can be stored in said energy accumulation devices.

BRIEF DESCRIPTION OF DRAWINGS

The present invention will now be described for illustrative but not limitative purposes, according to its preferred embodiments, with particular reference to the figures of the enclosed drawings, wherein:

figure 1 is a perspective top view of a machine transforming wind energy in electric energy, where the main part is a trolley running along a railway system, and comprising a system of sails interacting with wind currents;
figure 2 is a sectioned lateral view of a trolley belonging to the same machine, where a particular consisting of a dynamo is highlighted;
figure 3 if a front view of the same trolley of figure 2;
figure 4 is a front view of a trolley of a machine transforming wind energy in electric energy, according to another embodiment that uses a single rail structure;
figure 5 is a schematic global view of a system transforming wind energy in electric energy, in particular including said trolley, with a system of sails and a dynamo for generation of electric power.

BEST MODES FOR CARRYING OUT THE INVENTION

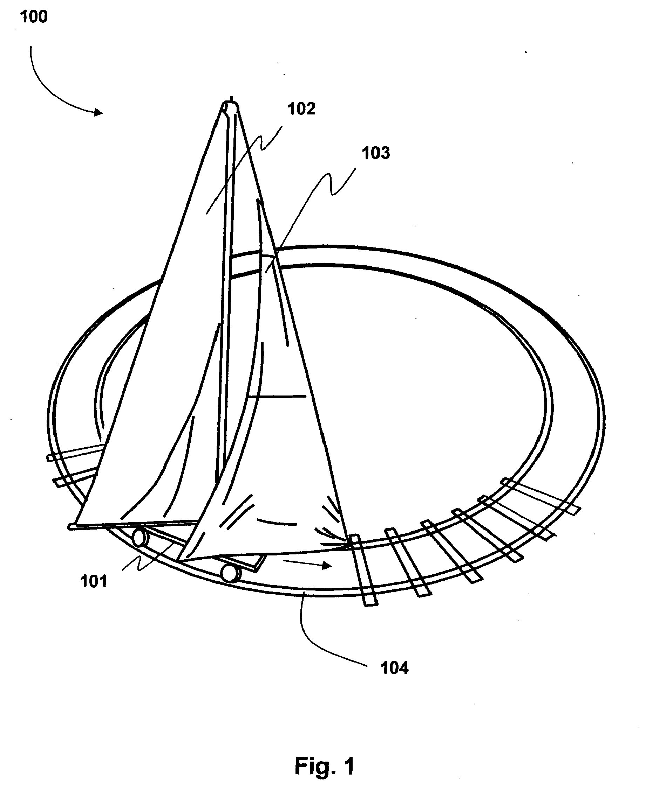

It is herein underlined that, in the following, only some of the many conceivable embodiments of the present invention will be described, and they are just particular examples that do not introduce any limitations, having the possibility to describe many other embodiments based on the disclosed technical solution of the present invention.
The main parts of machine 100, for transformation of wind energy in electric energy, are illustrated in figure 1, and they are, in particular, a trolley 101, carrying a system of sails 102 and 103, and a railway system 104 where said trolley 101 is constrained and free to run.
The basic principle of this invention is that the wind interaction, with the system of sails 102 and 103, generates a force that causes the consequent motion of trolley 101. This motion is able to keep a rotation of dynamo gears and therefore to generate electric energy.
In the case of figure 1, it has been chosen a specific example of sails' configuration, like that illustrated, and a specific ring closed path.
A first remark is that machine 100 should be able to generate energy continuously and independently on different directions of wind currents. In fact, intensity and direction of winds are by definition random variables, therefore it is quite impossible to predict the space-time configuration of winds in a specific place.
Consequently, machine 100 includes an automatic control system, that time by time defines the optimal orientation of sails 102 and 103 in order to keep trolley 101 constantly in motion. This control system mainly consists of a sensor able to detect direction and intensity of winds *(anemometer),* a data processing device, and actuators and/or microcontrollers able to move and to orientate sails 102 and 103 accordingly.
As known, the principle of *Bernoulli* states that the force moving sail vehicles is given by the difference of wind pressures on the two respective "faces" of sail. The possible different directions of wind, in respect of the longitudinal axis of vehicle, require that conductors change the position of sails continuously in order to have the best wind force.
Generally, the main points of sail of a vehicle are two: *close-hauled,* when the head is to wind, and *running downwind,* when the wind is coming from directly behind.
The automatic driving of a system of sails, in any situation and spatial configuration of winds, is a not-trivial problem that can be solved using modern feedback control systems, with synthesis based on eigenvalues, proportional-integral-derivative controller (PID), optimal control based on calculus of variations, or robust control *in H-infinite.*
The control algorithm can be embedded inside said data processing device that, in real time, will define the proper parameters, in order to have the optimal configuration of sails 102 and 103, in respect of the objective to keep trolley 101 constantly in motion along the rail system 104. These parameters are given to actuators and/or microcontrollers that are directly working on orientation of sails. A set of position detectors gives new data as a feedback to said data processing device, so that the control algorithms can work properly.

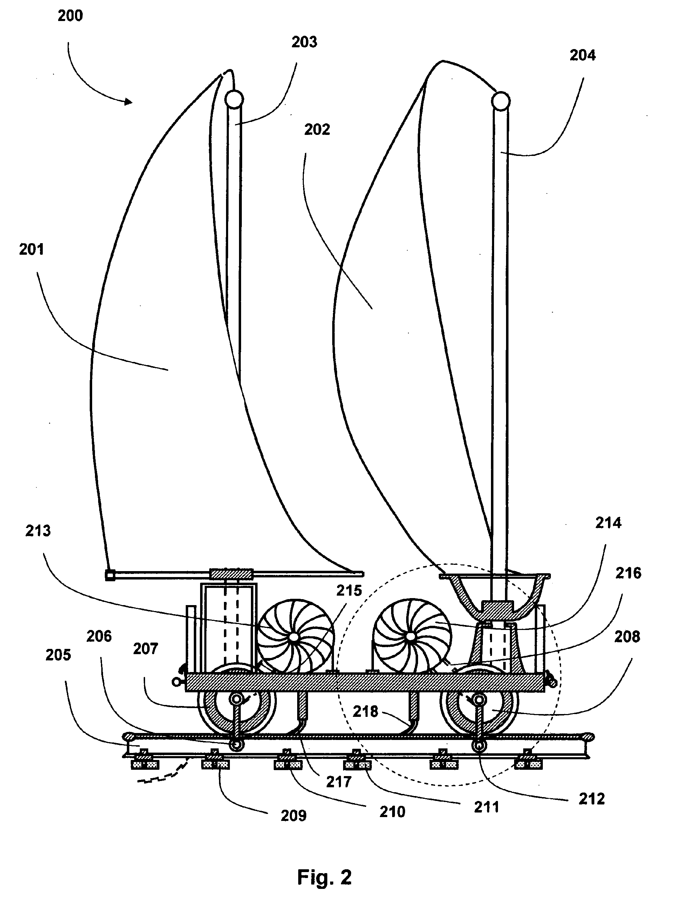

In figure 2 it is illustrated more in detail trolley 200, that carries the sails 201 and 202 of the present invention. The sails 201 and 202 are sustained on trolley 200 by respective masts 203 and 204. The same trolley 200 runs along railway 205, that is kept stable on ground by a set of ties with respective bolts 209, 210 and 211. In this case, the lateral wheels 207 and 208 of trolley 200 include some additional small wheels, 206 and 212, that run in the lower part of railway 205 in order to avoid derailment.
The translatory motion of trolley 200 along the railway 205 causes the rotation of gears belonging to dynamo 213 and 214, activated through transmission belts 215 e 216 connected to wheels 207 and 208. A pair of brush contacts, 217 and 218, connect electrically dynamo, 213 and 214, to conductors placed along the railway, so that the produced electric energy can be immediately transmitted towards external user devices, so-called load, or towards energy accumulation devices like, in example, rechargeable batteries.

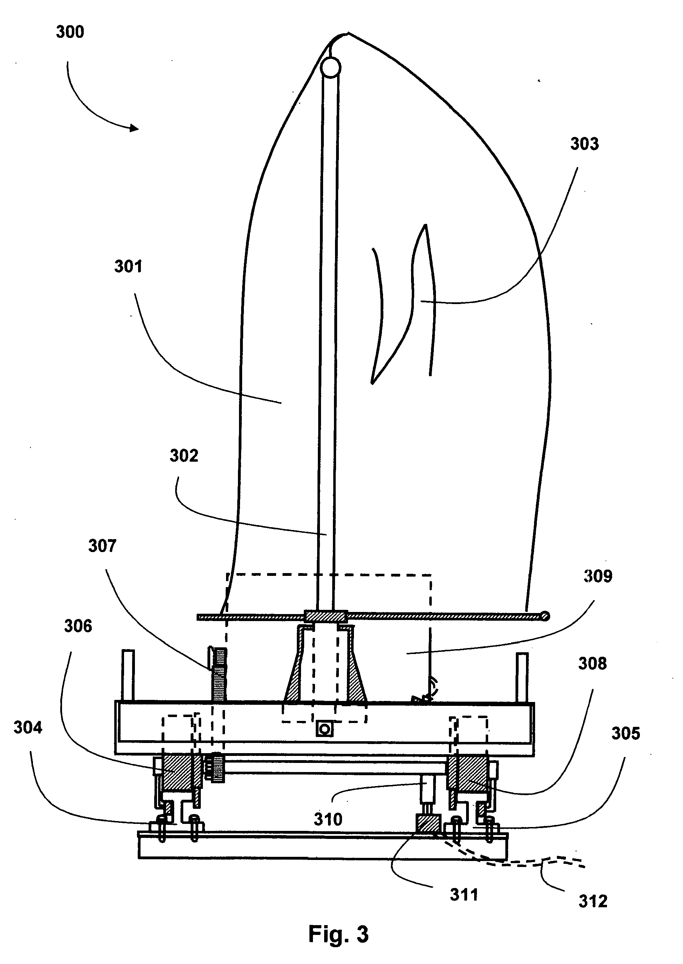

In the front view of figure 3, the typical parts of the same trolley of figure 2 are better highlighted. In particular, trolley 300 stands with wheels 306 and 308 on rails 304 and 305. The transmission belt 307, during motion of trolley 300, keeps in rotation the dynamo gears 309. The same dynamo 309 is electrically connected, through a brush contact element 310, to a conductor 311 that is placed along the railway. In this way, as already introduced, it has been realized the transmission of energy to the outside world.

In the front view of figure 3, among the two sails carried on trolley 300, only sail 301 is visible, connected to mast 302. It is clear that the same sail 301, properly oriented, is able to interact with the wind currents in order to lead the translatory motion of trolley 300 along rails 304 and 305.

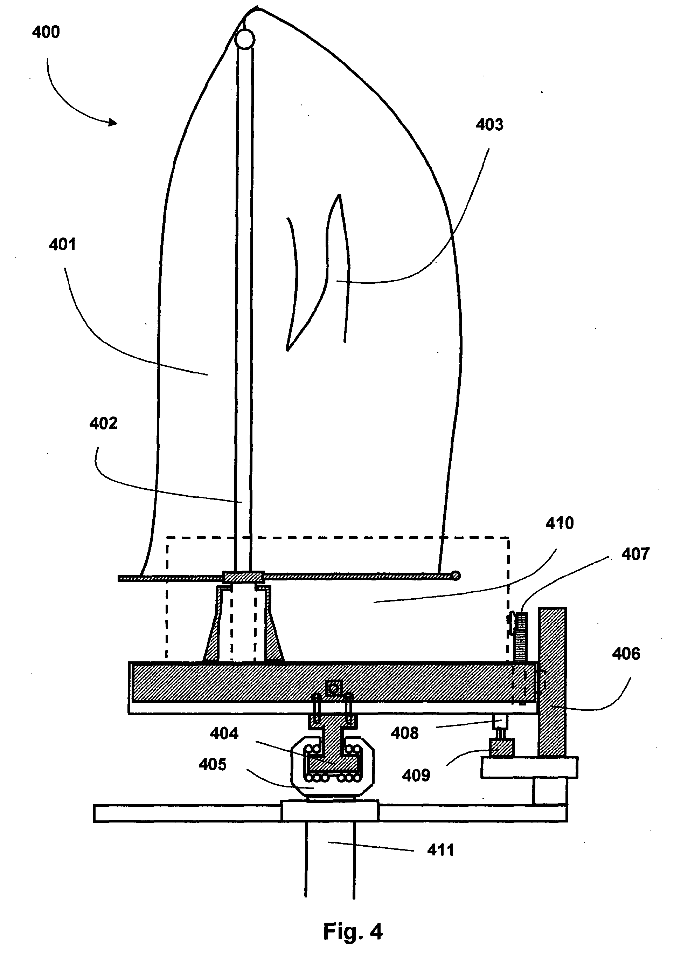

In figure 4 it is illustrated another embodiment, similar to the previous one, of the present invention, where trolley 400 runs, instead, on a single rail structure. In this case, again the propulsive force is given by system of sails 401, but there is an additional advantage to use the magnetic levitation technology (MAGLEV), that significantly decreases frictions of trolley 400 on railway, increasing the rate of transformation of wind energy in electric energy.

However, in order to have a train of gears 407 of dynamo 410 constantly in motion, it is necessary to include a wheel 406 constantly in contact with the ground structure. This wheel 406, transmits a rotary motion to gears 407 of dynamo 407 in correspondence to a translatory motion of trolley 400, permitting the simultaneous production of electric energy.

In this case again, brush contact 408 on a conductor 409, placed along the single rail structure 411, permits the transmission of energy to the outside world. This energy can be immediately transmitted towards external user devices or towards energy accumulation devices.

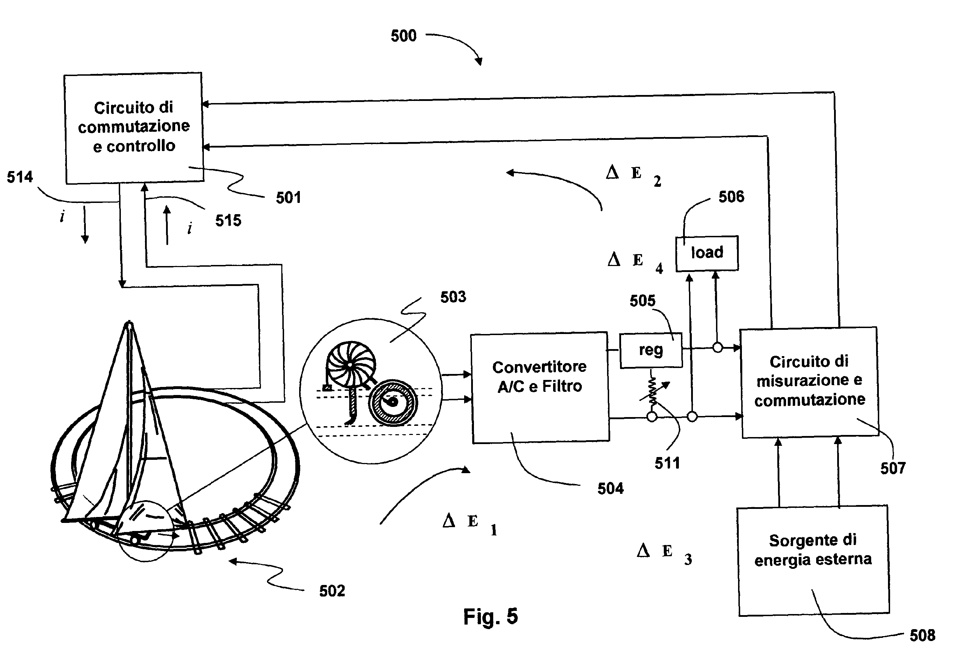

In figure 5 it is illustrated a schematic view that better explains the energy balance of the machine 500 for transformation of wind energy in electric energy.

When the system is working at full stretch, the trolley with seals 502, running along the railway on the effect of wind current interactions, keeps the dynamo gears 503 in motion, generating the electric energy ($\Delta E_1$). This energy can be made available immediately to an external user 506 (*load*), or can be stored in proper energy accumulation devices ($\Delta E_4$).

In any case, part of the generated energy ($\Delta E_2$) is available again as a feedback to system 501 in order to optimize the global efficiency of the machine.

When it is necessary, for any reason, a *start-up* current, an external source of energy 508 is on-line connected in order to supply energy ($\Delta E_3$). This situation is useful especially when the intensity of wind currents is not sufficient to "start" the machine. Therefore, from an energetic point of view, the conservation of energy law states the following equation:

$$\Delta E_1 + \Delta E_3 = \Delta E_2 + \Delta E_4 + \Delta E_{diss.} \qquad (1)$$

that is, the quantity of energy $\Delta E_1$, produced by motion of trolley with sails 502, through dynamo 503, in addition to the quantity of external energy $\Delta E_3$, must be equal to the quantity of energy $\Delta E_2$, absorbed by the same device 502, in addition to the quantity of energy $\Delta E_4$, absorbed by a user 506 (*load*), in addition again to the energy $\Delta E_{diss.}$, dissipated by friction, Joule effect, etc.

The present invention includes additional embodiments corresponding to variations on its general structure and to variations on shape of its parts.

In example, although in the above description a single trolley with sails has been illustrated, it is possible to link a series of identical trolleys in order to build a train, or convoy, comprising generators of electric power, and therefore to multiply the quantity of produced energy.

Furthermore, the railway system can define a running path that is particularly various and articulated, following in example the morphology and roughness of landscapes, going from a simple case, like a closed ring path, to a complex situation like a nationwide railway system.

Again, the scale factor of the machine, subject of the present invention, can range from typical dimensions of toy models, useful in example to supply small remote devices for road signals, to dimensions of big industrial plants, that can represent big wind power plants able to guarantee the basic energy needs of cities and villages. These plants can be placed on remote mountains, in large desert surfaces or even on surface of seas and oceans.

Another important aspect, marginal to the above described technical solutions, but particularly significant in the realization of this invention on a large industrial scale, is that, when the sails are visible to the large public, they constitute an ideal vehicle for publicity messages.

For this reason, beyond the basic function of transforming wind energy in electric energy, the present machine can realize a useful instrument suitable to show publicity messages addressed to the large public.

Therefore, all of the above examples show that the present invention achieves the proposed objectives. In particular, it permits to realize a machine able to transform wind energy in electric energy, so that the same electric energy is directly available to a final user or stored in proper energy accumulation devices.

Then, it permits to realize a machine where said transformation of energy happens in any environmental situation, providing orientation and calibration of parts according to different values of angle and intensity of winds.

Furthermore, the present invention has modular and scalable parts so that the machine can be used according to different topologies and different levels of complexity, going from the typical dimensions of scale models, to the dimensions of big power plants.

Finally, the present proposed machine can be realized on a large industrial scale, having standard and well available components, characterized in a sustainable production either from economical and from environmental point of view.

The present invention has been described for illustrative but not limitative purposes, according to its preferred embodiments, but it is clear that modifications and/or changes can be introduced by those skilled in the art without departing from the relevant scope, as defined in the enclosed claims.

**Claims**

1. A machine (100) transforming wind energy in electric energy, **characterized in that** comprising:

   - at least one trolley (101), free to run along a constrained path on a guiding system (104);
   - at least one system of sails (102, 103), carried on said trolley (101), able to interact with wind currents and therefore to transform wind energy in kinetic energy of the same trolley (101);
   - means for orientation and control of said system of sails (102, 103);
   - at least one dynamo, comprising a train of gears activated by motion of said trolley (101), able to generate electric energy;
   - means for transmission of electric energy towards one or more external users (load) or towards energy accumulation devices (battery),
   so that said system of sails (102, 103) interacts with wind currents and leads the motion of said trolley (101) along said guiding system (104), and gears of said dynamo are simultaneously activated, generating in this way the electric energy that can be stored in said energy accumulation devices.

2. A machine (100) transforming wind energy in electric energy, according to previous claim 1, **characterized in that** said means for orientation and control comprise:

   - a system of sensors and/or detectors of physical parameters like intensity and direction of wind currents, position and orientation of said system of sails (102, 103);
   - a microprocessor machine that: receives a set of data as an input from said system of sensors and/or detectors of physical parameters; computes said data according to a specific control algorithm; gives a set of data as an output, related to optimal position and angle of said system of sails (102, 103);
   - a system of actuators and/or microcontrollers that uses said data of optimal position and angle of sails (102, 103) and directly leads specific orientation devices,
   so that said trolley (101) is kept, under the effect of wind currents, in constant motion along said guiding system (104), independently on wind direction.

3. A machine (100) transforming wind energy in electric energy, according to previous claim 2, **characterized in that** said specific control algorithm is one of the following:

   - synthesis based on eigenvalues;
   - proportional-integral-derivative controller (PID);
   - optimal control based on calculus of variations;
   - robust control *in H-infinite.*

4. A machine (100) transforming wind energy in electric energy, according to one or more of previous claims, **characterized in that:**

   - said dynamo (213, 214) are carried on said trolley (200) and a train of gears of said dynamo (213, 214) is activated through transmission belts (215, 216) connected to wheels (207, 208) of the same trolley (200),
   so that the translatory motion of trolley (200) automatically generates, through said dynamo (213, 214), electric energy.

5. A machine (100) transforming wind energy in electric energy, according to one or more of previous claims, **characterized in** further comprising:

- brush contacts (217, 218) that connect electrically said dynamo (213, 214) to conductors placed along the railway,
so that the produced electric energy can be immediately transmitted towards external user devices, so-called load, or towards energy accumulation devices like, in example, rechargeable batteries.

6. A machine (100) transforming wind energy in electric energy, according to one or more of previous claims, **characterized in** comprising, close to lateral wheels (207, 208) of trolley (200), some additional small wheels (206, 212) that run in the lower part of railway (205) in order to avoid derailment.

7. A machine (100) transforming wind energy in electric energy, according to one or more of previous claims, **characterized in that:**

- said guiding system (104) is composed of a single rail structure (405), preferably based on a magnetic levitation technology (MAGLEV),
so that frictions of trolley (400) on railway are decreased significantly, increasing the rate of transformation of wind energy in electric energy.

8. A machine (100) transforming wind energy in electric energy, according to one or more of previous claims, **characterized in that:**

- said trolley (101) is linked to a series of identical trolleys (101), in order to build a train, or convoy, of electric power generators;
- said guiding system (104) defines a running path that is particularly various and articulated, following in example the morphology and roughness of landscapes;
- the scale factor of machine (100) can range from typical dimensions of toy models to dimensions of big industrial plants,
so that it is possible to cover different uses, from supply of small remote devices for road signals, to energy needs of cities and villages.

9. A machine (100) transforming wind energy in electric energy, according to one or more of previous claims, **characterized in that:**

- on the external visible surface of said system of sails (301, 401), or in any other visible part of said machine (100), it is shown a specific message (303, 403), that is: a written sentence, an image, a logo or any other distinctive sign,
so that said machine (100) represents a communication channel for transmission of messages, preferably publicity, to the large public.

**Fig. 1**

**Fig. 2**

**Fig. 3**

**Fig. 4**

Fig. 5

# EP 2 078 853 A1

Europäisches
Patentamt

European
Patent Office

Office européen
des brevets

## EUROPEAN SEARCH REPORT

Application Number

EP 08 42 5009

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 02/02934 A (ENVIRONMENTAL ENERGY SYSTEMS I [US]; DAVISON FRED E [US]) 10 January 2002 (2002-01-10) * abstract; figures 1,7 * | 1-9 | INV. F03D5/04 F03D7/00 F03D11/00 |
| X | FR 2 897 903 A (RAYNAL FRANCOIS [FR]) 31 August 2007 (2007-08-31) * abstract; figures 1,2 * | 1-9 | |
| X | FR 2 312 666 A (DOLLFUS JACQUES [FR]) 24 December 1976 (1976-12-24) * the whole document * | 1-9 | |
| X | WO 2006/131575 A (CASTAN CASTAN JOSE MARIA [ES]) 14 December 2006 (2006-12-14) * abstract; figures 1,2 * | 1-9 | |
| X | US 3 504 988 A (STENNER HERBERT ALFRED) 7 April 1970 (1970-04-07) * the whole document * | 1-9 | |
| X | US 2004/164562 A1 (LATYSHEV SERGEI [IL]) 26 August 2004 (2004-08-26) * the whole document * | 1-9 | TECHNICAL FIELDS SEARCHED (IPC)  F03D |
| X | US 5 758 911 A (GERHARDT HEINZ A [US]) 2 June 1998 (1998-06-02) * the whole document * | 1-9 | |
| X | DE 42 34 649 A1 (HARTMANN KONSTANTIN [DE]) 29 July 1993 (1993-07-29) * the whole document * | 1-9 | |

The present search report has been drawn up for all claims

| Place of search | Date of completion of the search | Examiner |
|---|---|---|
| Munich | 13 November 2008 | Avramidis, Pavlos |

EPO FORM 1503 03.82 (P04C01)

**ANNEX TO THE EUROPEAN SEARCH REPORT
ON EUROPEAN PATENT APPLICATION NO.**

EP 08 42 5009

This annex lists the patent family members relating to the patent documents cited in the above-mentioned European search report.
The members are as contained in the European Patent Office EDP file on
The European Patent Office is in no way liable for these particulars which are merely given for the purpose of information.

13-11-2008

| Patent document cited in search report | | Publication date | Patent family member(s) | | Publication date |
|---|---|---|---|---|---|
| WO 0202934 | A | 10-01-2002 | AU | 7888001 A | 14-01-2002 |
| FR 2897903 | A | 31-08-2007 | NONE | | |
| FR 2312666 | A | 24-12-1976 | NONE | | |
| WO 2006131575 | A | 14-12-2006 | ES | 1060609 U | 16-10-2005 |
| US 3504988 | A | 07-04-1970 | GB | 1168314 A | 22-10-1969 |
| US 2004164562 | A1 | 26-08-2004 | IL | 140105 A | 17-05-2005 |
| US 5758911 | A | 02-06-1998 | US | 5992341 A | 30-11-1999 |
| DE 4234649 | A1 | 29-07-1993 | NONE | | |

EPO FORM P0459

For more details about this annex : see Official Journal of the European Patent Office, No. 12/82